(19) Europäisches Patentamt
European Patent Office
Office européen des brevets

(11) Numéro de publication: **0 040 124**
**B1**

(12) # FASCICULE DE BREVET EUROPEEN

(45) Date de publication du fascicule du brevet: **27.03.85**

(51) Int. Cl.⁴: **C 08 F 220/58**

(21) Numéro de dépôt: **81400659.9**

(22) Date de dépôt: **28.04.81**

(54) **Nouveaux copolymères hydrophiles à base de N- tris (hydroxyméthyl) méthyl acrylamide, procédés pour leur préparation, gels aqueux desdits copolymères et leur utilisation comme échangeurs d'ions.**

(30) Priorité: **09.05.80 FR 8010382**

(43) Date de publication de la demande: **18.11.81 Bulletin 81/46**

(45) Mention de la délivrance du brevet: **27.03.85 Bulletin 85/13**

(84) Etats contractants désignés: **BE CH DE FR GB IT LI LU NL SE**

(56) Documents cités: **FR - A - 2 378 808**

**Le dossier contient des informations techniques présentées postérieurement au dépôt de la demande et ne figurant pas dans le présent fascicule.**

(73) Titulaire: **PHARMUKA LABORATOIRES, 35 Quai du Moulin de Cage, F-92231 Gennevilliers (FR)**

(72) Inventeur: **Boschetti, Egisto, 5, Rue du Docteur Rochefort, F-78400 Chatou (FR)**

(74) Mandataire: **Gaumont, Robert et al, RHONE-POULENC RECHERCHES Service Brevets Pharma 25, Quai Paul Doumer, F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



BUNDESDRUCKEREI BERLIN

**Description**

La présente invention a pour objet de nouveaux copolymères hydrophiles à base de N-[tris (hydroxyméthyl) méthyl] acrylamide, utilisables sous forme de gels aqueux dans les techniques de séparation par échange d'ions des substances naturelles ou synthétiques. L'invention concerne également les procédés de préparation desdits copolymères.

Il est déjà connu (cf. Tetrahedron Letters n° 6, 1975, p. 357–358; brevet français 2 378 808) des copolymères hydrophiles de N-[tris (hydroxyméthyl) méthyl] acrylamide et d'un monomère, hydroxylé ou non, possédant plusieurs doubles liaisons éthyléniques polymérisables (agent réticulant). Ces copolymères sont utilisables, sous forme de gels aqueux, comme supports pour la chromatographie par perméation de gel et dans les techniques d'immobilisation des substances naturelles.

Il est également connu (cf. brevet français 2 260 597) de convertir des gels de polymères hydrophiles non ioniques du type poly(hydroxyacrylate) ou poly(hydroxyméthacrylate) en échangeurs anioniques par remplacement d'une partie des radicaux hydroxyle desdits polymères par des radicaux portant un groupe fonctionnel cationique, ledit remplacement étant effectué en faisant réagir sur les gels de polymères hydrophiles un composé porteur d'un groupe réactif vis-à-vis des radicaux hydroxyle et d'un groupe fonctionnel cationique.

Les copolymères hydrophiles selon l'invention sont des copolymères statistiques réticulés tridimensionnels, insolubles dans l'eau, contenant sous forme copolymérisée:

a) 25% à 98% en poids de N-[tris (hydroxyméthyl)méthyl]acrylamide ou de N-[tris(hydroxyméthyl)-méthyl] méthacrylamide, ou d'un mélange de ces deux composés,
b) 2% à 50% en poids d'un ou plusieurs monomères possédant plusieurs doubles liaisons éthyléniques polymérisables et exempts de groupes fonctionnels anioniques ou cationiques,
c) 0,1% à 50% en poids d'un ou plusieurs monomères répondant à la formule:

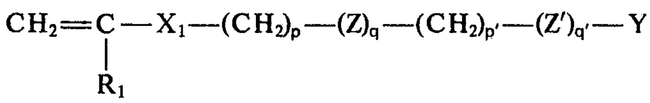 (III)

dans laquelle $R_1$ est un atome d'hydrogène, un groupe alkyle ayant 1 à 4 atomes de carbone, en particulier un groupe méthyle, un groupe $SO_3H$ ou un groupe $SO_3M$, M désignant un métal alcalin, $X_1$ est une liaison simple, un atome d'oxygène ou un groupe

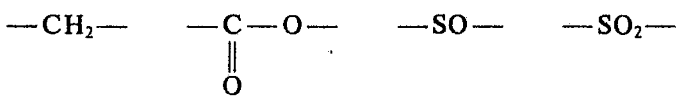 ou phénylène

p,p', q et q' sont des nombres entiers de 0 à 4, Z et Z' sont des atomes d'oxygène ou de soufre ou des groupes

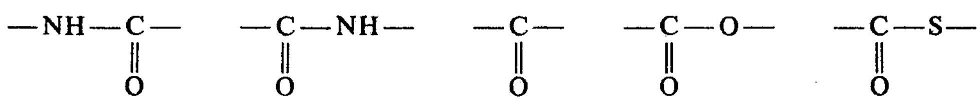

$—SO—$ $—SO_2—$ $—CH{=}N—$ $—NH—SO_2—$ $—CHOH—$

$—C{\equiv}C—$ ou 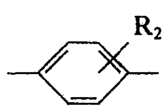

$R_2$ désignant un atome d'hydrogène ou un groupe méthyle ou méthoxy, et Y représente un groupe amino monosubstitué, amino disubstitué, pyrimidinyle, guanidyle ou purinyle, salifié ou non, un groupe ammonium quaternaire, un groupe $SO_3H$ ou un groupe $SO_3M$, M étant un métal alcalin.

Les groupes amino monosubstitués ou disubstitués, non salifiés ou salifiés et les groupes ammonium quaternaires représentés par Y sont les groupes de formule:

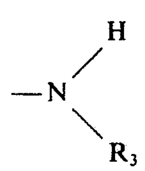

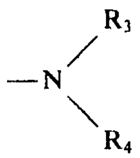

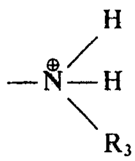

$A^{\ominus}$

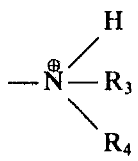

$A^{\ominus}$ ou

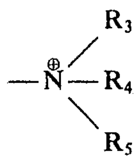

$A^{\ominus}$

dans lesquelles $R_3$, $R_4$ et $R_6$ sont des groupes alkyle ayant 1 à 3 atomes de carbone et $A^{\ominus}$ est l'anion chlorure, bromure ou iodure.

Les copolymères selon l'invention contiennent de préférence 0,2% à 15% en poids de monomères c).

Comme exemples de composés de formule (III) on peut citer, sans que cette énumération ait un caractère limitatif, les composés suivants:

- l'acide vinylsulfonique et ses sels alcalins,
- les méthacrylate et acrylate de diéthylaminoéthyle et leurs chlorhydrates,
- les méthacrylate et acrylate de diméthylaminoéthyle et leurs chlorhydrates,
- les N-(diéthylaminoéthyl) acrylamide et N-(diméthylaminopropyl) acrylamide et leurs chlorhydrates,
- le chlorure de (méthacrylamido-3) propyltriméthylammonium,
- le chlorure de (méthacryloyloxy-3) propyltriméthylammonium.

Comme monomères b) (monomères réticulants) on peut citer en particulier les diesters des glycols avec les acides acrylique et méthacrylique, par exemple le diacrylate d'éthylèneglycol et le diméthacrylate d'éthylèneglycol, les alkylidène-bis-acrylamides ou -méthacrylamides, et les composés de formule:

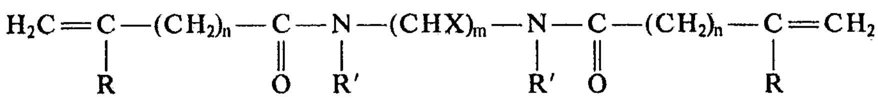

(I)

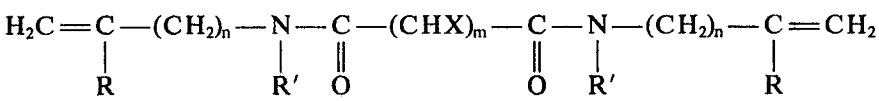

(II)

dans lesquelles R est un atome d'hydrogène ou un groupe méthyle, R' est un atome d'hydrogène ou un groupe hydroxyméthyle, X est un atome d'hydrogène ou un groupe OH, n et m sont des nombres entiers de 0 à 6.

Dans les copolymères selon l'invention, les monomères b) répondent de préférence à l'une des formules (I) et (II) ci-dessus. Comme exemples de tels monomères b) on peut citer en particulier le N,N'-méthylène-bis-acrylamide, le N,N'-éthylène-bis-méthacrylamide, l'hexaméthylène-bis-acrylamide, le N,N'-diallyl-tartradiamide, le glyoxal-bis-acrylamide (ou N,N'-dihydroxyéthylène-bis-acrylamide) et le N,N'-méthylène-bis-hydroxyméthylacrylamide.

Les copolymères hydrophiles réticulés selon l'invention peuvent être préparés, selon des procédés connus, par polymérisation radicalaire des monomères a), b) et c). La polymérisation peut en particulier être effectuée en solution aqueuse, à une température de 0°C à 100°C, de préférence 40°C à 60°C, et en présence des initiateurs habituellement utilisés en polymérisation radicalaire. Comme tels on peut citer, par exemple, les systèmes red-ox comme N,N,N,'N'-tétraméthyl éthylènediamine (TEMED) + persulfate alcalin ou diméthylaminopropionitrile + persulfate alcalin, les peroxydes organiques comme le peroxyde de benzoyle, et l'azo-2,2'-bis-isobutyronitrile. La concentration totale en monomères [c'est-à-dire la concentration en monomères a) + b) + c)] des solutions aqueuses soumises à la polymérisation est le plus souvent comprise entre 20 g/l et 400 g/l.

La polymérisation peut être une polymérisation en bloc ou en émulsion. Dans le cas de la polymérisation en bloc, la solution aqueuse contenant les divers monomères et l'initiateur est soumise à

une polymérisation en phase homogène. Le bloc de gel aqueux obtenu est ensuite fractionné en grains, par exemple par passage à travers les mailles d'un tamis.

La polymérisation en émulsion, qui est le mode de préparation préféré car elle fournit directement le gel aqueux sous forme de granules sphériques de taille déterminée, peut être effectuée comme suit:

La solution aqueuse contenant les divers monomères est versée lentement dans une phase liquide organique, non miscible à l'eau, maintenue en agitation et contenant éventuellement un agent émulsifiant. La vitesse d'agitation est réglée de façon à obtenir une émulsion de la phase aqueuse dans la phase organique ayant la taille de gouttelettes voulue. Le contrôle de cette taille, donc le réglage de l'agitation, est effectué par examen au microscope de prélèvements faits sur l'émulsion. Une fois réglée la vitesse d'agitation, on introduit dans l'émulsion l'initiateur, qui déclenche la polymérisation. Cette dernière est poursuivie jusqu'à son terme en conservant les mêmes conditions d'agitation. Les perles de gel aqueux ainsi obtenues sont lavées avec un solvant ou un tensio-actif afin de les débarasser des traces de phase organique, puis avec de l'eau.

Comme phase organique liquide utilisable on peut citer, par exemple, les huiles végétales (huile de soja, huile d'arachide, huile de tournesol) ou minérales (huile de paraffine, huile de silicones), les produits de distillation fractionnée du pétrole (benzène, toluène), les hydrocarbures chlorés (tétrachlorure de carbone, chlorure de méthylène), et les mélanges de ces divers composés. La phase organique liquide peut éventuellement contenir un agent émulsionnant comme les produits connus sous la dénomination commerciale »Span«, »Arlacel« ou »Tween«, à la concentration de 0,1% à 4% en volume.

Les perles de gel aqueux obtenues par le procédé de polymérisation en émulsion ont un diamètre de particules qui varie, suivant les conditions opératoires, de 1 µm à 600 µm. De préférence le diamètre des particules est compris entre 40 µm et 80 µm.

Les gels aqueux obtenus par l'un des procédés exposés ci-dessus peuvent être conservés en suspension dans de l'eau ou dans une solution tampon aqueuse, en présence de traces d'un bactériostatique comme, par exemple, l'azothydrate de sodium. Une concentration de 0,02% en azothydrate de sodium suffit à assurer la conservation.

Les gels aqueux peuvent aussi être séchés par les procédés conventionnels (lyophilisation, traitement par un solvant organique miscible à l'eau, etc . . .). On obtient ainsi les copolymères sous forme d'une poudre blanche, réhydratable au moment de l'emploi. La réhydratation s'effectue par simple contact avec de l'eau ou une solution tampon aqueuse. Les poudres de copolymères représentent une forme très commode de stockage car elles occupent un volume très faible et peuvent être conservées indéfiniment, sans addition de conservateurs et bactériostatiques.

Les gels aqueux peuvent contenir 2% à 60% en poids de copolymère selon l'invention, le restant étant constitué par de l'eau d'hydratation.

Les copolymères selon l'invention peuvent être utilisés avantageusement, à l'état de gels aqueux, comme échangeurs d'ions pour la séparation des protéines, en particulier des protéines du sérum, des polynucléotides et des nucléotides de synthèse.

Les exemples suivants illustrent l'invention sans la limiter.

## Exemple 1

Dans un réacteur de 700 ml, on introduit 350 ml d'huile de paraffine et 2 ml de l'agent émulsifiant connu sous la dénomination commerciale »Span 80« (tensio-actif non ionique constitué par des esters d'acide gras et du sorbitan). On agite mécaniquement le mélange et le chauffe à 55°C. Par ailleurs on dissout dans 200 ml d'eau déminéralisée chauffée à 55°C 60 g de N-[tris(hydroxyméthyl)méthyl]-acrylamide, 8 g de N,N'-méthylène-bis-hydroxyméthylacrylamide et 12 g de chlorure de (méthacrylamido-3)propyltriméthylammonium, et ajoute à cette solution 300 mg de persulfate d'ammonium. La solution ainsi obtenue est versée dans l'huile de paraffine agitée. La vitesse d'agitation est réglée de façon à obtenir une émulsion stable dont les gouttelettes ont un diamètre d'environ 80 µm. Au bout de 10 minutes d'agitation on introduit dans l'émulsion 0,32 ml de TEMED et on poursuit l'agitation pendant encore 30 minutes.

On refroidit alors le milieu réactionnel par addition d'eau glacée, arrête l'agitation et laisse reposer le mélange quelques heures. La phase huileuse surnageante est éliminée par succion et les perles de gel obtenues sont récupérées par décantation. Ces perles sont lavées à l'aide d'une solution aqueuse de Triton X-100 à 0,1%, pour éliminer les restes d'huile, puis avec de l'eau déminéralisée jusqu'à élimination totale du détergent.

On obtient ainsi des perles, d'un diamètre moyen de 80 µm, d'un gel aqueux d'un copolymère N-[tris(hydroxyméthyl)méthyl]acrylamide/N,N'-méthylène-bis-hydroxyméthyl-acrylamide/chlorure de (méthacrylamido-3)propyltriméthylammonium. Ces perles possèdent une capacité d'échange d'ions de 200 µeq par ml et peuvent être conservées dans de l'eau déminéralisée ou dans un tampon approprié.

## Exemple 2

Dans un réacteur de 700 ml, on introduit 350 ml d'huile de paraffine et 2 ml de l'agent émulsifiant connu sous la dénomination commerciale »Arlacel C« (tensio-actif non ionique constitué par des esters d'acide gras et du sorbitan). On agite mécaniquement le mélange et le chauffe à 55°C. Par ailleurs on dissout dans 200 ml d'eau déminéralisée chauffée à 55°C 60 g de N-[tris(hydroxyméthyl)méthyl]-acrylamide, 8 g de N,N'-méthylène-bis-acrylamide et 12 g de chlorhydrate de N-(diéthylaminoéthyl)-acrylamide, et ajoute à cette solution 300 mg de persulfate d'ammonium. La solution ainsi obtenue est versée dans l'huile de paraffine agitée. La vitesse d'agitation est réglée de façon à obtenir une émulsion stable dont les gouttelettes ont un diamètre d'environ 80 μm. Au bout de 10 minutes d'agitation on introduit dans l'émulsion 0,32 ml de TEMED et on poursuit l'agitation pendant environ 30 minutes.

On refroidit alors le milieu réactionnel par addition d'eau glacée, arrête l'agitation et laisse reposer le mélange quelques heures. La phase huileuse surnageante est éliminée par succion et les perles de gel obtenues sont récupérées par décantation. Ces perles sont lavées à l'aide d'une solution aqueuse de Triton X-100 à 0,1%, pour éliminer les restes d'huile, puis avec de l'eau déminéralisée jusqu'à élimination totale du détergent.

On obtient ainsi des perles, d'un diamètre moyen de 80 μm, d'un gel aqueux d'un copolymère N-[tris(hydroxyméthyl)méthyl]acrylamide/N,N'-méthylène-bis-acrylamide/chlorhydrate de N-(diéthylaminoéthyl)acrylamide. Ces perles possèdent une capacité d'échange d'ions de 300 μeq par ml et peuvent être conservées dans une solution aqueuse molaire de chlorure de sodium.

## Exemple 3

Les perles de gel aqueux obtenues à l'exemple 2 sont placées, sur une hauteur de 9,5 cm, dans une colonne de section 2 $cm^2$. La colonne échangeuse d'ions ainsi constituée est placée en milieu tampon aqueux tris(hydroxyméthyl)aminométhane/HCl 0,05 M, pH 8,6, puis on introduit en haut de la colonne l'échantillon contenant les substances à séparer. Cet échantillon est constitué par 1 ml de la solution tampon précédente contenant en solution 10 mg de chacune des quatre substances suivantes : cytochrome C, hémoglobine, β-lactoglobuline et ovalbumine. L'échantillon est fixé sur la colonne, puis on élue avec une solution tampon tris(hydroxyméthyl)aminométhane/HCl 0,05 M, pH 8,6 contenant une concentration croissante de NaCl (la concentration de NaCl croît de 0 à 0,5 M). On sépare ainsi les quatre substances contenues dans l'échantillon.

## Revendications

1. Copolymères statistiques réticulés tridimensionnels, insolubles dans l'eau, à base de N-[tris (hydroxyméthyl) méthyl] acrylamide ou méthacrylamide et de monomères possédant plusieurs doubles liaisons éthyléniques polymérisables caractérisés en ce qu'ils contiennent sous forme copolymèrisée:

a) 25% à 98% en poids de N-[tris (hydroxyméthyl) méthyl]acrylamide ou de N-[tris (hydroxyméthyl) méthyl] méthacrylamide, ou d'un mélange de ces deux composés,
b) 2% à 50% en poids d'un ou plusieurs monomères possédant plusieurs doubles liaisons éthyléniques polymérisables et exempts de groupes fonctionnels anioniques ou cationiques,
c) 0,1% à 50% en poids d'un ou plusieurs monomères répondant à la formule:

$$CH_2=\underset{\underset{\displaystyle R_1}{|}}{C}-X_1-(CH_2)_p-(Z)_q-(CH_2)_{p'}-(Z')_{q'}-Y \qquad (III)$$

dans laquelle $R_1$ est un atome d'hydrogène, un groupe alkyle ayant 1 à 4 atomes de carbone, en particulier un groupe méthyle, un groupe $SO_3H$ ou un groupe $SO_3M$, M désignant un métal alcalin, $X_1$ est une liaison simple, un atome d'oxygène ou un groupe

$$-CH_2- \qquad -\underset{\underset{\displaystyle O}{\|}}{C}-O- \qquad -SO- \qquad -SO_2- \qquad \text{ou} \qquad \text{p-phénylène}$$

p, p', q et q' sont des nombres entiers de 0 à 4, Z et Z' sont des atomes d'oxygène ou de soufre ou des groupes

$$-NH-\underset{\underset{\displaystyle O}{\|}}{C} \qquad -\underset{\underset{\displaystyle O}{\|}}{C}-NH- \qquad -\underset{\underset{\displaystyle O}{\|}}{C}- \qquad -\underset{\underset{\displaystyle O}{\|}}{C}-O- \qquad -\underset{\underset{\displaystyle O}{\|}}{C}-S$$

—SO— —$SO_2$— —CH=N— —NH—$SO_2$— —CHOH—

—C≡C— ou 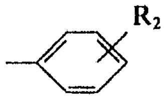

$R_2$ désignant un atome d'hydrogène ou un groupe méthyle ou méthoxy, et Y représente un groupe

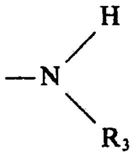 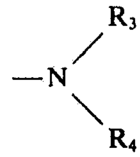 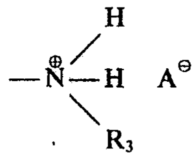 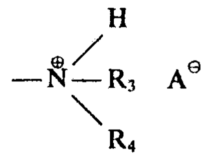 ou 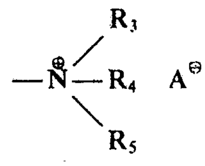

$R_3$, $R_4$ et $R_5$ représentant des groupes alkyle ayant 1 à 3 atomes de carbone et $A^\ominus$ l'anion chlorure, bromure ou iodure. Y représente aussi un groupe pyrimidinyle, guanidyle ou purinyle, salifié ou non, ou un groupe $SO_3H$ ou $SO_3M$, M étant un métal alcalin.

2. Copolymères selon la revendication 1, caractérisés en ce qu'ils contiennent sous forme copolymérisée 0,2% à 15% en poids de monomères c).

3. Copolymères selon l'une quelconque des revendications 1 et 2, caractérisés en ce que le ou les monomères b) répondent à l'une des formules:

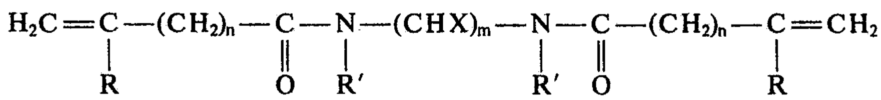 (I)

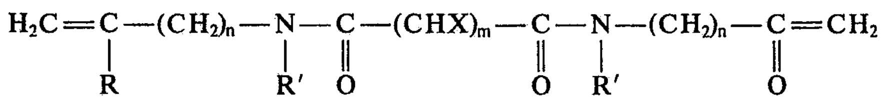 (II)

dans lesquelles R est un atome d'hydrogène ou un groupe méthyle, R' est un atome d'hydrogène ou un groupe hydroxyméthyle, X est un atome d'hydrogène ou un groupe OH, n et m sont des nombres entiers de 0 à 6.

4. Copolymères selon l'une quelconque des revendications 1 à 3, caractérisés en ce que, dans la formule (III) des monomères c), Y représente un groupe

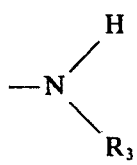 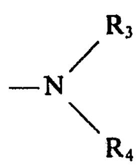 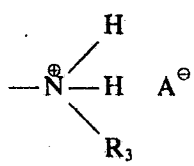 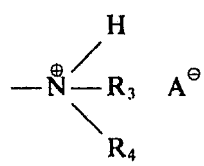 ou 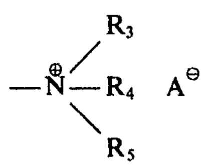

$R_3$, $R_4$, $R_5$ et $A^\ominus$ ayant les significations indiquées à la revendication 1.

5. Copolymères selon l'une quelconque des revendications 1 à 3, caractérisés en ce que le monomère c) est choisi parmi l'acide vinylsulfonique et ses sels alcalins,

- les méthacrylate et acrylate de diéthylaminoéthyle et leurs chlorhydrates,
- les méthacrylate et acrylate de diméthylaminoéthyle et leurs chlorhydrates,
- les N-(diéthylaminoéthyl) acrylamide et N-(diméthylaminopropyl) acrylamide et leurs chlorhydrates,
- le chlorure de (méthacrylamido-3) propyltriméthylammonium,
- le chlorure de (méthacryloyloxy-3) propyltriméthylammonium.

6. Procédé de préparation des copolymères selon la revendication 1, caractérisé en ce qu'il consiste à effectuer la polymérisation radicalaire des monomères a), b) et c).

7. Procédé selon la revendication 6, caractérisé en ce que la polymérisation est effectuée en solution aqueuse, à une température de 0°C à 100°C, en présence d'un initiateur de polymérisation radicalaire.

8. Procédé selon la revendication 7, caractérisé en ce que la solution aqueuse est sous forme d'une émulsion au sein d'une phase liquide organique, non miscible à l'eau.

9. Gels aqueux caractérisés en ce qu'ils contiennent 2% à 60% en poids d'un copolymère tel que défini dans chacune des revendications 1 à 5.

10. Gels aqueux selon la revendication 9, caractérisés en ce qu'ils sont sous forme de perles ayant un diamètre de 1 μm à 600 μm.

11. Gels aqueux selon la revendication 10, caractérisés en ce que la diamètre des perles est compris

entre 40 µm et 80 µm.

12. Application des gels tels que définis dans chacune des revendications 9 à 11 à la séparation des substances naturelles ou synthétiques par échange d'ions.

## Patentansprüche

1. Dreidimensionale, vernetzte, statistische Copolymere, die in Wasser unlöslich sind, auf Basis von N-[tris-(Hydroxymethyl)-methyl]-acrylamid oder -methacrylamid und von Monomeren, die mehrere polymerisierbare ethylenische Doppelbindungen besitzen, dadurch gekennzeichnet, daß sie in copolymerisierter Form enthalten:

a) 25 bis 98 Gew.-% N-[tris-(Hydroxymethyl)-methyl]-acrylamid oder N-[tris-Hydroxymethyl)-methyl]-methacrylamid oder ein Gemisch dieser beiden Verbindungen,
b) 2 bis 50 Gew.-% eines oder mehrerer Monomeren, die mehrere polymerisierbare ethylenische Doppelbindungen besitzen und frei von anionischen oder kationischen funktionellen Gruppen sind,
c) 0,1 bis 50 Gew.-% eines oder mehrerer Monomeren entsprechend der Formel III

$$CH_2{=}\underset{\displaystyle R_1}{\underset{|}{C}}{-}X_1{-}(CH_2)_p{-}(Z)_q{-}(CH_2)_{p'}{-}(Z')_{q'}{-}Y \qquad \text{(III)}$$

worin $R_1$ ein Wasserstoffatom, eine Alkylgruppe mit 1 bis 4 Kohlenstoffatomen, insbesondere eine Methylgruppe, eine $SO_3H$-Gruppe oder eine $SO_3M$-Gruppe, wobei M ein Alkalimetall bezeichnet, darstellt, $X_1$ eine Einfachbindung, ein Sauerstoffatom oder eine Gruppe

$$-CH_2- \qquad -\underset{\displaystyle O}{\underset{\|}{C}}-O- \qquad -SO- \qquad -SO_2- \qquad \text{oder} \qquad \text{p-Phenylengruppe}$$

ist, p, p', q und q' ganze Zahlen von 0 bis 4 sind, Z und Z' Sauerstoff- oder Schwefelatome oder Gruppen

$$-NH-\underset{\displaystyle O}{\underset{\|}{C}} \qquad -\underset{\displaystyle O}{\underset{\|}{C}}-NH- \qquad -\underset{\displaystyle O}{\underset{\|}{C}}- \qquad -\underset{\displaystyle O}{\underset{\|}{C}}-O- \qquad -\underset{\displaystyle O}{\underset{\|}{C}}-S \qquad -SO-$$

$$-SO_2- \qquad -CH{=}N- \qquad -NH-SO_2- \qquad -CHOH- \qquad -C{\equiv}C-$$

oder 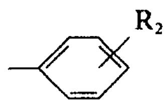

sind, wobei $R_2$ ein Wasserstoffatom oder eine Methyl- oder Methoxygruppe bedeutet und Y eine Gruppe

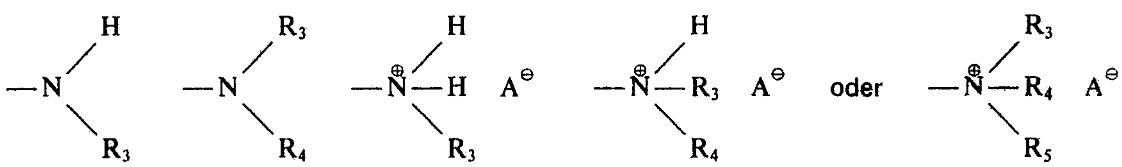

bedeutet, wobei $R_3$, $R_4$ und $R_5$ Alkylgruppen mit 1 bis 3 Kohlenstoffatomen und $A^{\ominus}$ das Chlorid-, Bromid- oder Jodidanion bedeutet, ebenfalls Y eine Pyrimidinyl-, Guanidyl- oder Purinylgruppe in Salzform oder nicht, oder eine Gruppe $SO_3H$ oder $SO_3M$, wobei M ein Alkalimetall ist.

2. Copolymere gemäß Anspruch 1, dadurch gekennzeichnet, daß sie in copolymerisierter Form 0,2 bis 15 Gew.-% Monomeres c) enthalten.

3. Copolymere gemäß einem der Ansprüche 1 und 2, dadurch gekennzeichnet, daß das oder die Monomeren b) einer der Formeln entsprechen:

$$H_2C{=}\underset{\displaystyle R}{\underset{|}{C}}{-}(CH_2)_n{-}\underset{\displaystyle O}{\underset{\|}{C}}{-}\underset{\displaystyle R'}{\underset{|}{N}}{-}(CHX)_m{-}\underset{\displaystyle R'}{\underset{|}{N}}{-}\underset{\displaystyle O}{\underset{\|}{C}}{-}(CH_2)_n{-}\underset{\displaystyle R}{\underset{|}{C}}{=}CH_2 \qquad \text{(I)}$$

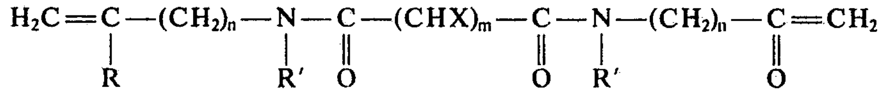

(II)

worin R ein Wasserstoffatom oder eine Methylgruppe, R′ ein Wasserstoffatom oder eine Hydroxymethylgruppe, X ein Wasserstoffatom oder eine OH-Gruppe bedeuten und n und m ganze Zahlen von 0 bis 6 sind.

4. Copolymere gemäß einem der Ansprüche 1 bis 3, dadurch gekennzeichnet, daß in der Formel III der Monomeren c) Y eine Gruppe

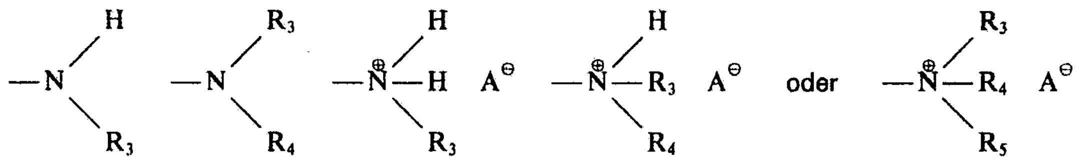

oder

bedeutet, wobei $R_2$, $R_2$, $R_2$ und $A^{\ominus}$ die in Anspruch 1 angegebenen Bedeutungen besitzen.

5. Copolymere gemäß einem der Ansprüche 1 bis 3, dadurch gekennzeichnet, daß das Monomere c) ausgewählt ist aus der Vinylsulfonsäure und ihren Alkalisalzen,

- den Diethylaminoethylmethacrylat und -acrylat und ihren Hydrochloriden,
- den Dimethylaminoethylmethacrylat und -acrylat und ihren Hydrochloriden,
- den N-(Diethylaminoethyl)-acrylamid und N-(Dimethylaminopropyl)-acrylamid und deren Hydrochloriden,
- dem (3-Methacrylamido)-propyltrimethylammoniumchlorid,
- dem (3-Methacryloyloxy)-propyltrimethylammoniumchlorid.

6. Verfahren zur Herstellung der Copolymeren gemäß Anspruch 1, dadurch gekennzeichnet, daß man die Radikalpolymerisation der Monomeren a), b) und c) bewirkt.

7. Verfahren gemäß Anspruch 6, dadurch gekennzeichnet, daß die Polymerisation in wäßriger Lösung bei einer Temperatur von 0°C bis 100°C in Gegenwart eines radikalischen Polymerisationsinitiators durchgeführt wird.

8. Verfahren gemäß Anspruch 7, dadurch gekennzeichnet, daß die wäßrige Lösung in Form einer Emulsion in einer organischen, flüssigen, mit Wasser nicht mischbaren Phase ist.

9. Wäßrige Gele, dadurch gekennzeichnet, daß sie 2 bis 60 Gew.-% eines Copolymeren, wie es in jedem der Ansprüche 1 bis 5 definiert ist, enthalten.

10. Wäßrige Gele gemäß Anspruch 9, dadurch gekennzeichnet, daß sie in Form von Perlen mit einem Durchmesser von 1 μm bis 600 μm vorliegen.

11. Wäßrige Gele gemäß Anspruch 10, dadurch gekennzeichnet, daß der Durchmesser der Perlen zwischen 40 μm und 80 μm liegt.

12. Anwendung der Gele, wie sie in jedem der Ansprüche 9 bis 11 definiert sind, zur Trennung von natürlichen oder synthetischen Substanzen durch Ionenaustausch.

**Claims**

1. Three-dimensional crosslinked random copolymers which are insoluble in water and are based on N-[tris-(hydroxymethyl)-methyl]-acrylamide or methacrylamide and monomers possessing a plurality of polymerisable ethylenic double bonds, characterised in that they contain, in a copolymerised form:

a) 25% to 98% by weight of N-[tris-(hydroxymethyl)-methyl]-acrylamide or N-[tris-(hydroxymethyl)-methyl]-methacrylamide or of a mixture of these two compounds,

b) 2% to 50% by weight of one or more monomers possessing a plurality of polymerisable ethylenic double bonds and free from anionic or cationic functional groups and

c) 0,1% to 50% by weight of one or more monomers corresponding to the formula:

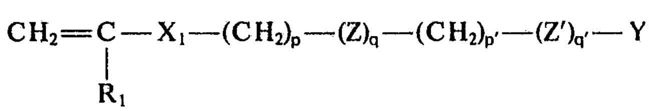

(III)

in which $R_1$ is a hydrogen atom, an alkyl group having 1 to 4 carbon atoms, in particular a methyl group, an $SO_3H$ group, or an $SO_3M$ group, with M denoting an alkali metal, $X_1$ is a single bond, an oxygen atom or a

—CH$_2$— 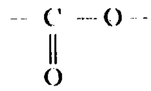 —SO— —SO$_2$— or p-phenylene group

p, p', q and q' are integers from 0 to 4, Z and Z' are oxygen or sulphur atoms or

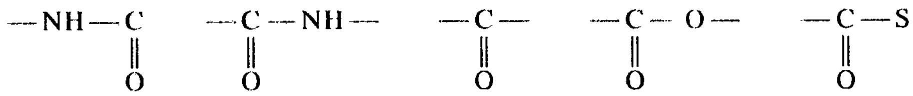

—SO— —SO$_2$— —CH=N— —NH—SO$_2$— —CHOH—

—C≡C— or 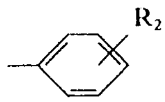

groups, with $R_2$ denoting a hydrogen atom or a methyl or methoxy group, and Y represents a

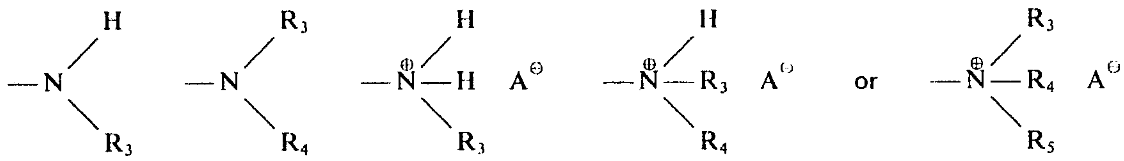

or

group, with $R_3$, $R_4$ and $R_5$ representing alkyl groups having 1 to 3 carbon atoms and $A^{\ominus}$ representing the chloride, bromide or iodide anion, or Y represents a pyrimidinyl, guanidyl or purinyl group, which may or may not be salified, or an $SO_3H$ or $SO_3M$ group, M being an alkali metal.

2. Copolymers according to Claim 1, characterised in that they contain 0,2% to 15% by weight of monomers c), in a copolymerised form.

3. Copolymers according to either of Claims 1 and 2, characterised in that the monomer or monomers b) correspond to one of the formulae:

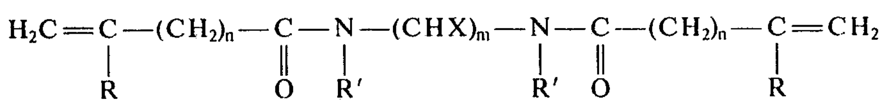 (I)

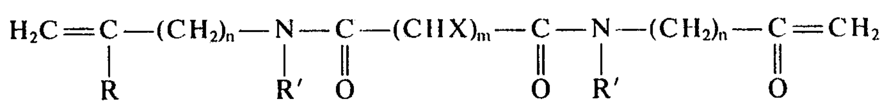 (II)

in which R is a hydrogen atom or a methyl group, R' is a hydrogen atom or a hydroxymethyl group, X is a hydrogen atom or an OH group, and n and m are integers from 0 to 6.

4. Copolymers according to any one of Claims 1 to 3, characterised in that in the formula (III) of the monomers c), Y represents a

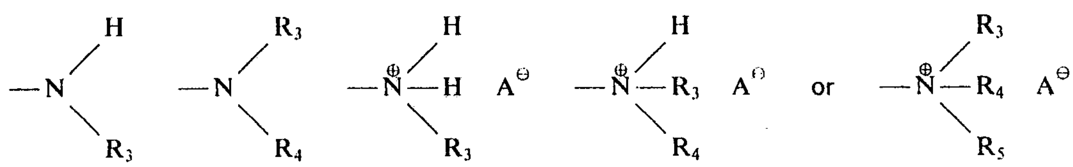

or

group, $R_3$, $R_4$, $R_5$ and $A^{\ominus}$ having the meanings indicated in Claim 1.

5. Copolymers according to any one of Claims 1 to 3, characterised in that the monomer c) is chosen from among vinylsulphonic acid and its alkali metal salts, diethylaminoethyl methacrylate and acrylate and their hydrochlorides, dimethylaminoethyl methacrylate and acrylate and their hydrochlorides, N-(diethylaminoethyl)-acrylamide and N-(dimethylaminopropyl)-acrylamide and their hydrochlorides, 3-methacrylamido-propyltrimethylammonium chloride and 3-methacryloyloxy-propyltrimethylammonium chloride.

6. Process for the preparation of the copolymers according to Claim 1, characterised in that it consists of carrying out the free radical polymerisation of monomers a), b) and c).

7. Process according to Claim 6, characterised in that the polymerisation is carried out in aqueous solution at a temperature of 0°C to 100°C in the presence of a free radical polymerisation initiator.

8. Process according to Claim 7, characterised in that the aqueous solution is in the form of an emulsion in an organic, water-immiscible liquid phase.

9. Aqueous gels, characterised in that they contain 2% to 60% by weight of a copolymer as defined in each of Claims 1 to 5.

10. Aqueous gels according to Claim 9, characterised in that they are in the form of beads having a diameter of 1 µm to 600 µm.

11. Aqueous gels according to Claim 10, characterised in that the diameter of the beads is between 40 µm and 80 µm.

12. Application of the gels as defined in any of Claims 9 to 11 to the separation of natural or synthetic substances by ion exchange.